# EUROPEAN PATENT APPLICATION

(11) **EP 2 651 115 A2**
(43) Date of publication of application: **16.10.2013**
(21) Application number: 12173467.7
(22) Date of filing: 25.06.2012
(51) Int. Cl.: H04N 5/225

(54) **Vehicle video recorder module**

(30) Priority: 10.04.2012 TW 101206455
(71) Applicant: Tung Thih Electronic Co., Ltd., Taoyuan County (TW)
(72) Inventor: Lin, Yih-Jyh, Luchu Township, Taoyuan County (TW); Shieh, Po-Zong, Luchu Township, Taoyuan County (TW)
(74) Representative: Pallini, Diego

(57) **Abstract**

A vehicle video recorder module has an enclosure, a power supply circuit board (20), an isolation shield (30), an image recording circuit board (40), a lens (50) and a connector (60). The enclosure has a rear base (10) and a front cover (11) mutually connected. The power supply circuit board (20), the isolation shield (30) and the image recording circuit board (40) are mounted inside the enclosure. The isolation shield (30) is mounted around the power supply circuit board (20) and the image recording circuit board (40). The lens (50) is mounted on the front cover (11). The connector (60) is connected to the rear base (10) and is electrically connected to the power supply circuit board (20) and the image recording circuit board (40). The structural design of the vehicle video recorder module can prevent electromagnetic interference, enables a stable operation and provides better waterproof performance.

## Description

### 1. Field of the Invention

The present invention relates to a vehicle video recorder and more particularly to a waterproof vehicle video recorder module against electromagnetic interference (EMI).

### 2. Description of the Related Art

Nowadays, vehicle video recorder modules are the common electronic devices equipped in vehicles and can be mounted around vehicle bodies to record images around the vehicle bodies to reduce the visual dead angle of the drivers and enhance safety in driving.

A conventional vehicle video recorder has an enclosure, an image recording circuit board, a lens part and a cable. The enclosure has several openings. The image recording circuit board and the lens part are mounted inside the enclosure. The image recording circuit board has a photosensing element mounted thereon. The lens part is located to align with one of the openings of the enclosure. The photosensing element corresponds to the lens part. The cable is mounted through another opening of the enclosure and extends outwards. One end of the cable is connected with a connector. A power supply circuit board is a flexible printed circuit board electrically connected to the cable and mounted around a periphery of the cable, and has adhesive coated thereon to bond the power supply circuit board on the cable and also to render the power supply circuit board waterproof. A rubber sealing gasket is mounted to each opening of the enclosure to prevent external moisture from entering an inner portion of the enclosure.

However, the power supply circuit boards of the conventional vehicle video recorders are sensitive to external EMI, causing instability in power supply thereof and leading to unstable operation of the conventional vehicle video recorders. Moreover, when vehicles are driving through a terrain with drastic temperature change, cracks easily appear around the openings of the enclosure due to the different coefficients of thermal expansion for the rubber sealing gasket and the enclosure. Therefore, moisture can still enter the enclosure and is condensed on the inside of the lens, rendering foggy lens and blurry recorded images.

An objective of the present invention is to provide a vehicle video recorder module being waterproof and EMI-resistant to ensure a stable operation.

To achieve the foregoing objective, the vehicle video recorder module has an enclosure, a power supply circuit board, an image recording circuit board, an isolation shield, a lens and a connector.

The enclosure has a rear base, a front cover and a chamber. The front cover is connected with the rear base and has a lens recess formed in the front cover. The chamber is defined in the rear base and the front cover.

The power supply circuit board is mounted in the chamber of the enclosure.

The image recording circuit board is mounted in the chamber of the enclosure, is electrically connected to the power supply circuit board, and has a photosensing element mounted on a front side of the image recording circuit board.

The isolation shield takes the form of a hollow metal frame, is mounted in the chamber of the enclosure, is mounted around the power supply circuit board and the image recording circuit board, and is electrically connected to the power supply circuit board and the image recording circuit board.

The lens is mounted in the lens recess and aligns with the photosensing element.

The connector is connected to the rear base and is electrically connected to the power supply circuit board and the image recording circuit board.

Preferably, the rear base has a first connection part formed on a rear side of the rear base, and the connector has a second connection part connected with the first connection part of the rear base through a cable.

Preferably, the connector is mounted on a rear side of the rear base and has a tubular wall and multiple power terminals. The tubular wall has a free end and an opening formed through the free end. The power terminals are mounted in the connector and are electrically connected to the power supply circuit board and the image recording circuit board.

Preferably, a sealing colloid is mounted in the first connection part.

Preferably, a sealing colloid is mounted in the enclosure and covers free ends of the power terminals.

Preferably, the rear base has an insertion wall formed on and protruding inwards from a perimeter on a front side of the rear base, and the front cover has a peripheral sidewall and a lens. The peripheral sidewall has an insertion slot formed therein and engages the insertion wall of the rear base. The lens wall is formed on a front side of the front cover and has the lens recess.

Preferably, the vehicle video recorder module further has a ring cap mounted around a periphery of the lens and fixed to an outer portion of the lens recess. A sealing colloid is mounted between a periphery of the lens and an inner wall of the lens recess.

Preferably, the power supply circuit board has two engagement edges and two earthing copper foils. The engagement edges are formed on two opposite side edges of the power supply circuit board. The earthing copper foils are mounted on the front side of the power supply circuit board. The isolation shield has two engagement slots and two resilient pressing leaves. The engagement slots are respectively formed through two opposite walls of the isolation shield and engage the respective engagement edges of the power supply circuit board. The resilient pressing leaves respectively abut against the earthing copper foils on the power supply circuit board.

Preferably, the front cover further has two assembly holes diagonally formed in an inner wall of the front cover. The image recording circuit board has two positioning holes and two grounding copper foils. The positioning holes are respectively formed through two diagonal corners of the image recording circuit board. The grounding copper foils are mounted thereon. The isolation shield further has two tabs and two fasteners. The tabs are respectively formed on and protrude inwards from two opposite walls of the isolation shield. Each tab has a hole formed therethrough. The fasteners are conductive, are sequentially and respectively mounted through the holes of the tabs, the positioning holes of the image recording circuit board and the assembly holes of the front cover. Each fastener has a head and a shank. The head abuts against the power supply circuit board. The shank is connected to the head and contacts one of the earthing copper foils on the image recording circuit board.

Preferably, the lens recess has a lens mounting hole formed in a central wall and having an inner thread formed on an inner wall of the lens mounting hole. The lens has a mounting neck formed on a rear side of the lens and has an external thread formed around a periphery of the mounting neck and engaging the inner thread of the lens mounting hole of the front cover.

Preferably, the rear base has two positioning blocks formed on and protruding from two diagonal corners on the front side of the rear base. One of the positioning blocks has a foolproof post formed on and protruding from the positioning block and having a positioning bore formed in a free end of the foolproof post. The front cover has a positioning rod formed on and protruding from a rear side of the lens wall and engaging the positioning bore of the foolproof post. The power supply circuit board further has two first unfilled corners respectively formed on and recessed from two diagonal corners of the power supply circuit board, and the positioning blocks of the rear base abut against and position the respective first unfilled corners. The image recording circuit board further has a second unfilled corner formed on and recessed from one of the corners of the image recording circuit board, and one of the positioning blocks of the rear base abuts against the second unfilled corner.

As the power supply circuit board and the image recording circuit board are mounted in the chamber of the enclosure and the isolation shield is mounted around the power supply circuit board and the image recording circuit board, the isolation shield can shield EMI against the power supply circuit board and the image recording circuit board, thereby providing a more stable operation than conventional vehicle video recorder modules do.

The second connection part of the connector is detachably connected with the first connection part of the rear base of the enclosure through a cable. Accordingly, the vehicle video recorder module of the present invention can be connected to various connection sockets having different specifications and mounted in vehicles by the replacement of different connectors, thereby enhancing operational flexibility.

As the connector may be a cable-free design, the vehicle video recorder module can be promptly and conveniently removed from the stand and the connection socket and replaced with a new vehicle video recorder module upon repairing and mounting the vehicle video recorder module.

The sealing colloid filled inside the vehicle video recorder module can surely seal the seams among all parts of the vehicle video recorder module to provide better waterproof performance. When vehicles drive through terrains with drastic temperature change, waterproof capability of the vehicle video recorder module can still be ensured. Moisture will not permeate through the enclosure and be condensed inside of the lens to shorten the operation duration of the vehicle video recorder module.

The insertion wall of the rear base engages and is welded to the insertion slot of the front cover with supersonic wave so that no additional fasteners are required to combine the rear base and the front cover. Total parts can be reduced, the production cost is lowered, and the enclosure has better waterproof performance.

The ring cap is mounted around a periphery of the lens and fixed to an outer portion of the lens recess and sealing colloid is filled between a periphery of the lens and an inner wall of the lens recess so that the lens and the lens recess are maintained in a sealed condition and moisture will not enter the enclosure and be condensed on the inside of the lens through the lens and the lens recess to shorten the operation duration of the vehicle video recorder module.

With the positioning blocks and the foolproof post of the rear base together with the positioning rod of the front cover and the second unfilled corner of the image recording circuit board, the enclosure and the image recording circuit board can be correctly oriented and assembled to ensure that the image recording circuit board can correctly output images.

The front cover, the image recording circuit board and the isolation shield can be securely mounted through by the two fasteners so that the heads of the fasteners abut against the front side of the power supply circuit board and the power supply circuit board can be held by the heads of the fasteners and the electrical contacts on the rear base.

The engagement edges of the power supply circuit board engage the respective engagement slots of the isolation shield to securely combine the power supply circuit board and the isolation shield. The two pressing leaves of the isolation shield abut against the front side of the power supply circuit board to achieve the grounding effect.

Other objectives, advantages and novel features of the invention will become more apparent from the following detailed description when taken in conjunction with the accompanying drawings.

### IN THE DRAWINGS

Fig. 1 is a perspective view of an embodiment of a vehicle video recorder module in accordance with the present invention;
Fig. 2 is an exploded perspective view of the vehicle video recorder module in Fig. 1;
Fig. 3 an enlarged side view in partial section of the vehicle video recorder module in Fig. 1;
Fig. 4 is a perspective view of another embodiment of a vehicle video recorder module in accordance with the present invention; and
Fig. 5 is a partially exploded perspective view of the vehicle video recorder module in Fig. 4.

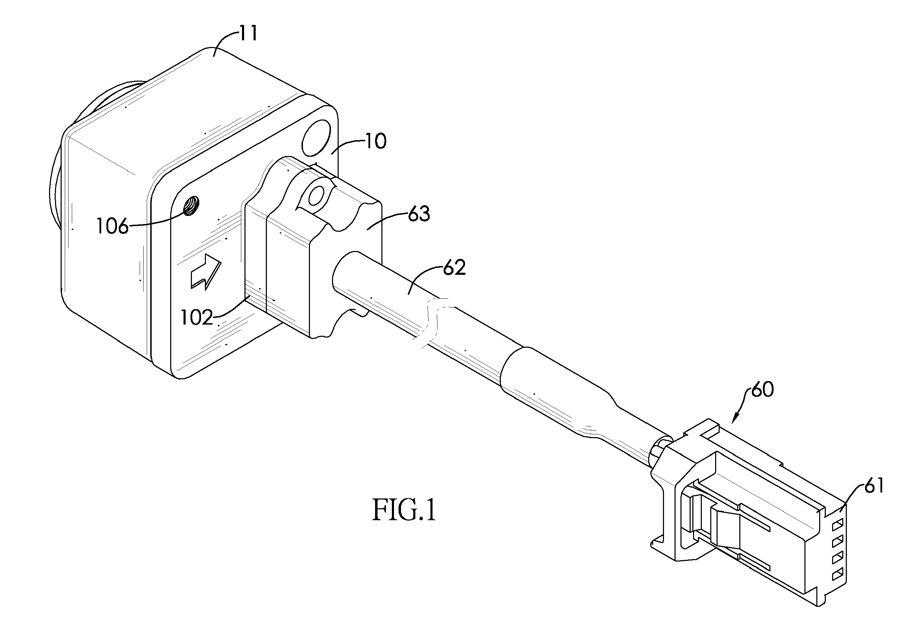

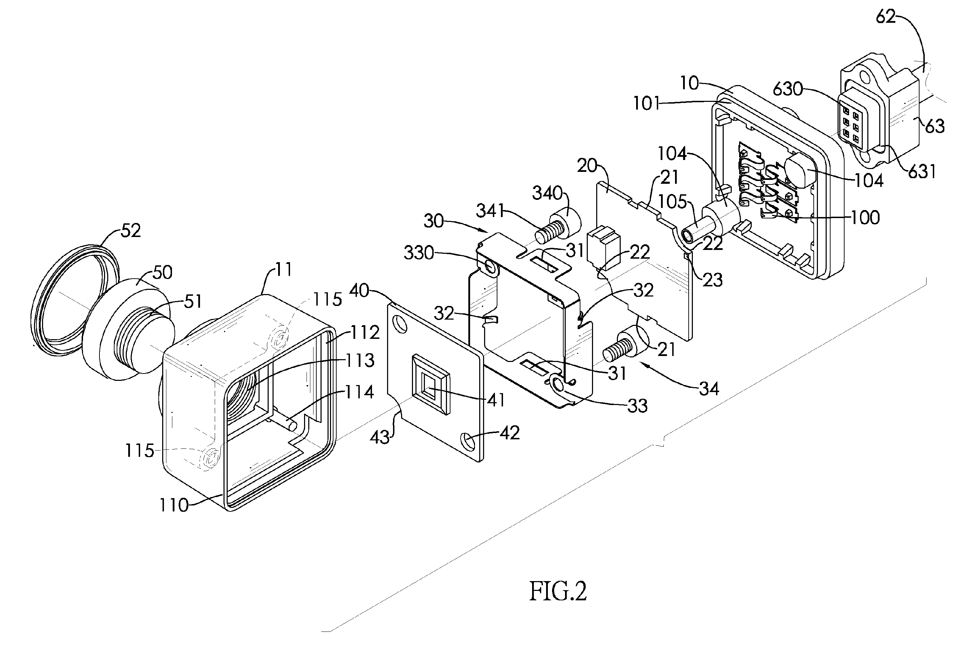

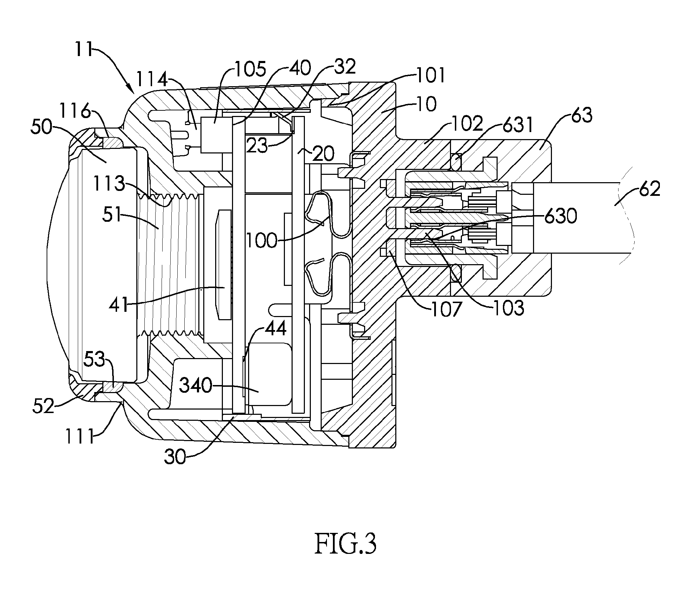

With reference to Figs. 1 to 3, an embodiment of a vehicle video recorder module in accordance with the present invention has an enclosure, a power supply circuit board 20, an image recording circuit board 40, an isolation shield 30, a lens 50 and a connector 60.

The enclosure has a rear base 10 and a front cover 11. The rear base 10 takes the form of a rectangular board and has multiple electrical contacts 100, an insertion wall 101, a first connection part 102, two positioning blocks 104 and a stand hole 106. Each electrical contact 100 takes the form of a spring leaf and is mounted on a front side of the rear base 11. The insertion wall 101 is formed on and protrudes inwards from a perimeter on the front side of the rear base 10. The first connection part 102 is formed on and protrudes outwards from a rear side of the rear base 10, has multiple power terminals 103 electrically connected to the respective electrical contacts 100, and is provided with sealing colloid 107 sheathed around one end of each power terminal 103. The two positioning blocks 104 are formed on and protrude from two diagonal corners on the front side of the rear base 10. One of the positioning blocks 104 has a foolproof post 105. The foolproof post 105 is formed on and protrudes from the positioning block 104 and has a positioning bore formed in a free end of the foolproof post 105. The stand hole 106 is formed in the rear side of the rear base 10 and is a threaded hole.

The front cover 11 takes the form of a rectangular box, is hollow, and has an opening, a peripheral sidewall 110 and a lens wall 111. The opening is formed through a rear side of the front cover 11. The peripheral sidewall 110 is rectangular tubular, is formed to define a chamber to communicate with the opening, and has an insertion slot 112 formed therein, being adjacent to the opening and corresponding to the insertion wall 101 in terms of size and shape. The lens wall 111 is formed on a front side of the front cover 11, and has a lens recess 116, a positioning rod 114 and two assembly holes 115. The lens recess 116 is formed in the lens wall 111, and has a stair-shaped inner sidewall, a central wall and a lens mounting hole 113. The lens mounting hole 113 is formed in the central wall and has an inner thread formed on an inner wall therein. The positioning rod 114 is formed on and protrudes from a rear side of the lens wall 111. The two assembly holes 115 are threaded holes and are diagonally formed in the lens wall 111.

The insertion wall 101 of the rear base 10 engages the insertion slot 112 of the front cover 11 to combine the enclosure. The insertion wall 101 and the insertion slot 112 may be welded together with supersonic wave so that the enclosure is closed and has a chamber defined therein and the positioning rod 114 is mounted in the positioning bore of the foolproof post 105.

The power supply circuit board 20 takes the form of a rectangular board and has two engagement edges 21 and two first unfilled corners 22. The engagement edges 21 are formed on two opposite side edges of the power supply circuit board 20. A rear side of the power supply circuit board 20 contacts and is electrically connected with the electrical contacts 100. The two first unfilled corners 22 are respectively formed on and recessed from two diagonal corners of the power supply circuit board 20. The positioning blocks 104 of the rear base 10 abut against and position the respective first unfilled corners 22.

The image recording circuit board 40 takes the form of a rectangular board, is mounted in the chamber of the enclosure, is electrically connected to the power supply circuit board 20, and has a photosensing element 41, two positioning holes 42, a second unfilled corner 43 and two earthing copper foils 44. The photosensing element 41 is centrally mounted on a front side of the image recording circuit board 40. The positioning holes 42 are respectively formed through two diagonal corners of the image recording circuit board 40. The second unfilled corner 43 is formed on and recessed from one of the corners of the image recording circuit board 40. One of the positioning blocks 104 of the rear base 10 abuts against the second unfilled corner 43. The earthing copper foils 44 are mounted on the image recording circuit board 40.

The isolation shield 30 takes the form of a hollow and rectangular metal frame, is mounted in the chamber of the enclosure and is mounted around the power supply circuit board 20 and the image recording circuit board 40, is electrically connected with the power supply circuit board 20 and the image recording circuit board 40, and has two engagement slots 31, two tabs 33 and two fasteners 34. The engagement slots 31 are respectively formed through two opposite walls of the isolation shield 30 and engage the respective engagement edges 21 of the power supply circuit board 20. In the present embodiment, the isolation shield 30 further has two resilient pressing leaves 32 respectively abutting against two earthing copper foils 23 on the front side of the power supply circuit board 20 for grounding. The tabs 33 are respectively formed on and protrude inwards from two opposite walls of the isolation shield 30 and each tab 33 has a hole 330 formed therethrough. The fasteners 34 are conductive and may be bolts, and each fastener 34 has a head 340 and a shank 341. The shank 341 is relatively smaller than the head 340 in diameter and has a thread formed around a periphery of the shank 341. The fasteners 34 are sequentially and respectively mounted through the holes 330 of the tabs 33, the positioning holes 42 of the image recording circuit board 40 and the assembly holes 115 of the front cover 11. The shanks 341 of the fasteners 34 contact the respective earthing copper foils 44 on the image recording circuit board 40 so that the isolation shield 30 and the image recording circuit board 40 are also grounded. A rear end face of the head 340 abuts against the front side of the power supply circuit board 20 so that the power supply circuit board 20 is commonly held by the heads 340 of the fasteners 34 and the electrical contacts 100.

The lens 50 is mounted in the lens recess 116 and has a mounting neck 51 and a ring cap 52. The mounting neck 51 has an external thread formed around a periphery of the mounting neck 51. The mounting neck 51 is mounted in the lens mounting hole 113 of the front cover 11 and aligns with the photosensing element 41. The external thread of the mounting neck 51 engages the inner thread of the lens mounting hole 113. The ring cap 52 is mounted around a periphery of the lens and is secured to an opening of the lens recess 116 with a supersonic wave processing. A sealing colloid 53 is mounted between a periphery of the lens 50 and an inner wall of the lens recess 116 adjacent to the opening of the lens recess 116.

The connector 60 has a plug-in end 61 and a second connection part 63. The plug-in end 61 is formed on one end of the connector 60. The second connection part 63 is connected with the other end of the connector 60 through a cable 62, and has multiple terminal holes 630 and a waterproof gasket 631. The terminal holes 630 are formed in a front end of the second connection part 63. The waterproof gasket 631 is mounted around the front end of the second connection part 63. The second connection part 63 and the first connection part 102 are detachably connected. The power terminals 103 of the first connection part 102 respectively are plugged in the respective terminal holes 630 for the connector 60 to be electrically connected to the power supply circuit board 20 and the image recording circuit board 40 via the cable 62.

When the vehicle video recorder module is operated, a connection socket and a stand are mounted inside a vehicle and the connection socket is connected to a computer inside the vehicle. When the vehicle video recorder module is mounted, the stand hole 106 of the rear base 10 is securely connected to the stand, and the plug-in end 61 of the connector 60 is connected to the connection socket so that the power supply circuit board 20 and the image recording circuit board 40 are electrically connected to the computer inside the vehicle in completion of the mounting procedures. As the isolation shield 30 is mounted around the power supply circuit board 20 and the image recording circuit board 40, an EMI shielding effect is generated against external electromagnetic wave interfering with the power supply circuit board 20 and the image recording circuit board 40 so that the power supply circuit board 20 and the image recording circuit board 40 can be stably operated. Furthermore, as the front cover 11 is secured to the rear base 10 and the ring cap 52 with a supersonic wave processing, no fastener, such as bolts, is required for the assembly and no waterproof gasket is required for the front cover 11, the rear base 10 and the ring cap 52 to achieve a tight connection. The arrangements of the sealing colloid 107, 53 effectively achieve an airtight effect and a good waterproof performance.

The second connection part 63 of the connector 60 and the first connection part 102 of the enclosure are designed to be detachable. Hence, multiple of the connectors 60 can be prepared to have the plug-in ends 61 capable of interfacing with different connection sockets and the second connection parts 63 capable of interfacing with the first connection part 102. Hence, the connector 60 can be replaced to suit for the connection socket inside a vehicle, thereby providing more operational flexibility.

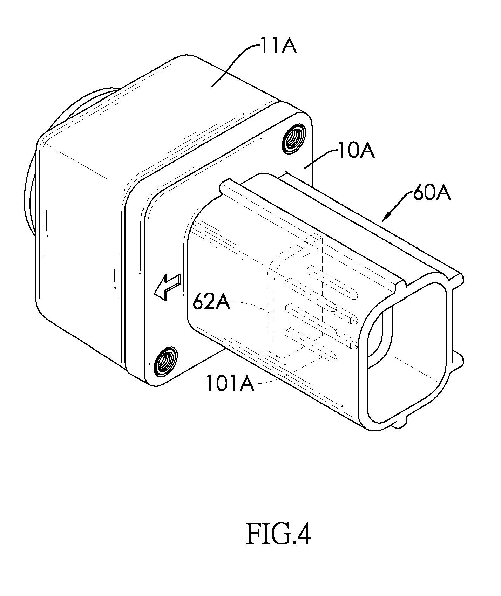

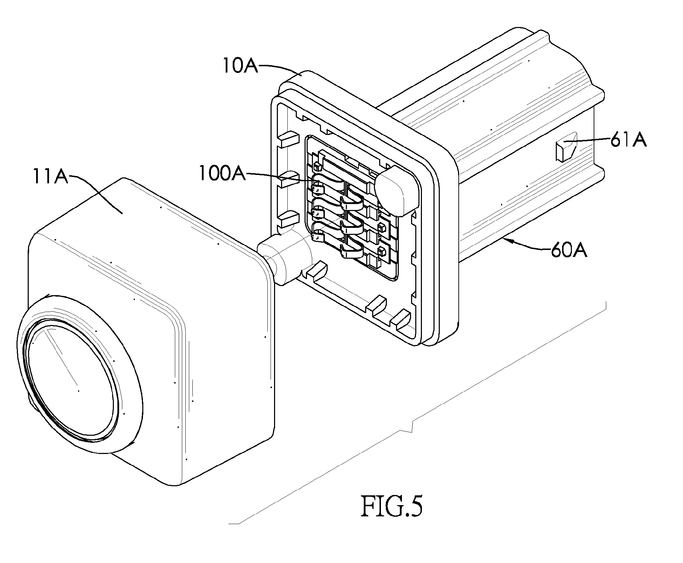

With reference to Figs. 4 and 5, another embodiment of a vehicle video recorder module in accordance with the present invention has an enclosure, a power supply circuit board, an isolation shield, an image recording circuit board, a lens and a connector 60A.

The enclosure has a rear base 10A and a front cover 11A. The front cover 11A is structurally similar to the front cover 11 in the foregoing embodiment. The rear base 10A has multiple electrical contacts 100A mounted on a front side of the rear base 10A. The connector 60A is mounted on a rear side of the rear base 10A and has a tubular wall, a fastening block 61A and multiple power terminals 101A. The tubular wall has a free end and an opening formed through the free end. The fastening block 61A is formed on an outer periphery of the tubular wall. The power terminals 101A are mounted in the connector 60A and electrically connected to the respective electrical contacts 100A. A sealing colloid 62A is mounted in the connector 60A and covers one end of each of the power terminals 101A.

The power supply circuit, the isolation shield and the image recording circuit board are mounted inside the enclosure. The power supply circuit and the image recording circuit board are electrically connected to the power terminals 101A. The lens is mounted on the front cover 11A and is structurally similar to the front cover 11 in the foregoing embodiment.

When the vehicle video recorder module in the present embodiment is operated, a connection socket and a stand are mounted inside a vehicle and the connection socket is connected to a computer inside the vehicle. The rear base 10A is connected to the stand, and the connector 60A is connected to the connection socket and is connected to the computer in the vehicle. The present embodiment has the identical EMI resistant function and waterproof feature. As the connector 60A is a cable-free design, the vehicle video recorder module can be promptly and conveniently removed from the stand and the connection socket and replaced with a new vehicle video recorder module upon repairing and mounting the vehicle video recorder module.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A vehicle video recorder module comprising:
an enclosure having:
a rear base (10);
a front cover (11) connected with the rear base (10) and having a lens recess (116) formed in the front cover (11); and
a chamber defined in the rear base (10) and the front cover (11);
a power supply circuit board (20) mounted in the chamber of the enclosure;
an image recording circuit board (40) mounted in the chamber of the enclosure, electrically connected to the power supply circuit board (20), and having a photosensing element (41) mounted on a front side of the image recording circuit board (40);
a lens (50) mounted in the lens recess (116) and aligning with the photosensing element (41); and
a connector (60) connected to the rear base (10) and electrically connected to the power supply circuit board (20) and the image recording circuit board (40);
**characterized by** further comprising an isolation shield (30) taking the form of a hollow metal frame, mounted in the chamber of the enclosure, mounted around the power supply circuit board (20) and the image recording circuit board (40), and electrically connected to the power supply circuit board (20) and the image recording circuit board (40).

2. The vehicle video recorder module as claimed in claim 1, wherein
the rear base (10) has a first connection part (102) formed on a rear side of the rear base (10); and
the connector (60) has a second connection part (63) connected with the first connection part (102) of the rear base (10) through a cable (62).

3. The vehicle video recorder module as claimed in claim 1, wherein the connector (60) is mounted on a rear side of the rear base (10) and has:
a tubular wall having:
a free end; and
an opening formed through the free end; and
multiple power terminals (101A) mounted in the connector (60) and electrically connected to the power supply circuit board (20) and the image recording circuit board (40).

4. The vehicle video recorder module as claimed in claim 2, wherein the first connection part (102) is filled with sealing colloid (107).

5. The vehicle video recorder module as claimed in claim 3, wherein the enclosure is filled with sealing colloid (62A) and the sealing colloid (62A) covers free ends of the power terminals (101A).

6. The vehicle video recorder module as claimed in any one of claims 1 to 5, wherein
the rear base (10) has an insertion wall (101) formed on and protruding inwards from a perimeter on a front side of the rear base (10); and
the front cover (11) has:
a peripheral sidewall (110) having an insertion slot (112) formed therein and engaging the insertion wall (101) of the rear base (10); and
a lens wall (111) formed on a front side of the front cover (11) and having the lens recess (116).

7. The vehicle video recorder module as claimed in claim 6, further comprising a ring cap (52) mounted around a periphery of the lens (50) and fixed to an outer portion of the lens recess (116), wherein sealing colloid (53) is filled between a periphery of the lens (50) and an inner wall of the lens recess (116).

8. The vehicle video recorder module as claimed in claim 7, wherein
the power supply circuit board (20) has:
two engagement edges (21) formed on two opposite side edges of the power supply circuit board (20); and
two earthing copper foils (23) mounted on the front side of the power supply circuit board (20); and
the isolation shield (30) has:
two engagement slots (31) respectively formed through two opposite walls of the isolation shield (30) and engaging the respective engagement edges (21) of the power supply circuit board (20); and
two resilient pressing leaves (32) respectively abutting against the earthing copper foils (23) on the power supply circuit board (20).

9. The vehicle video recorder module as claimed in claim 8, wherein
the front cover (11) further has two assembly holes (115) diagonally formed in an inner wall of the front cover (11); and
the image recording circuit board (40) has:
two positioning holes (42) respectively formed through two diagonal corners of the image recording circuit board (40); and
two grounding copper foils (44) mounted thereon; and
the isolation shield (30) further has:
two tabs (33) respectively formed on and protruding inwards from two opposite walls of the isolation shield (30), each tab (33) having a hole (330) formed therethrough; and
two fasteners (34) being conductive, sequentially and respectively mounted through the holes (330) of the tabs (33), the positioning holes (42) of the image recording circuit board (40) and the assembly holes (115) of the front cover (11), each fastener (34) having:
a head (340) abutting against the power supply circuit board (20); and
a shank (341) connected to the head (340) and contacting one of the earthing copper foils (44) on the image recording circuit board (40).

10. The vehicle video recorder module as claimed in claim 9, wherein
the lens recess (116) has a lens mounting hole (113) formed in a central wall and having an inner thread formed on an inner wall of the lens mounting hole (113); and
the lens (50) has a mounting neck (51) formed on a rear side of the lens (50) and having an external thread formed around a periphery of the mounting neck (51) and engaging the inner thread of the lens mounting hole (113) of the front cover (11).

11. The vehicle video recorder module as claimed in claim 10, wherein
the rear base (10) has two positioning blocks (104) formed on and protruding from two diagonal corners on the front side of the rear base (10), wherein one of the positioning blocks (104) has a foolproof post (105) formed on and protruding from the positioning block (104) and having a positioning bore formed in a free end of the foolproof post (105);
the front cover (11) has a positioning rod (114) formed on and protruding from a rear side of the lens wall (111) and engaging the positioning bore of the foolproof post (105);
the power supply circuit board (20) further has two first unfilled corners (22) respectively formed on and recessed from two diagonal corners of the power supply circuit board (20), and the positioning blocks (104) of the rear base (10) abut against and position the respective first unfilled corners (22); and
the image recording circuit board (40) further has a second unfilled corner (43) formed on and recessed from one of the corners of the image recording circuit board (40), and one of the positioning blocks (104) of the rear base (10) abuts against the second unfilled corner (43).
